# EUROPEAN PATENT SPECIFICATION

(11) **EP 0 936 266 B1**
(45) Date of publication and mention of the grant of the patent: **24.12.2008**
(21) Application number: 98102528.1
(22) Date of filing: 13.02.1998
(51) Int. Cl.: C11B 3/00, A23D 9/00, A23D 7/00, A23L 1/01, A21D 2/16

(54) **Refining of edible oil retaining maximum antioxidative potency**
Raffinieren von essbaren Ölen mit höchstem antioxidativem Wirkungsgrad
Raffinage d'huiles comestibles à activité antioxydante maximale

(43) Date of publication of application: 18.08.1999
(73) Proprietor: Lipidia Holding S.A., 2121 Luxembourg-Kirchberg (LU)
(72) Inventor: Silkeberg, Alf, E-03590 Altea (ES); Kochhar, Parkash S., Dr., Earley, Reading, RG6 1AN (GB)
(74) Representative: advotec.

(56) References cited:
- EP-A- 0 477 825
- EP-A- 0 710 477
- EP-A- 0 771 531
- WO-A-80/02100
- WO-A-95/30727
- US-A- 4 880 574
- US-A- 5 552 167
- DATABASE WPI Section Ch, Week 8311 Derwent Publications Ltd., London, GB; Class D13, AN 83-26634K XP002071424 & JP 58 021 492 A (KUKI SANGYO KK)

## Description

### TECHNICAL FIELD

Fats and oils (oils are just liquid fats) are stable food products, because they contain virtually no water, and, thus microorganisms cannot thrive or grow in them. However, they do read with water and/or oxygen and under influence of light, resulting in off-odours and bad flavour, known as rancidity. The rapidity of the onset of rancidity is much greater at high temperature (as the one used in preparation of food). Each oil has its own stability, which varies with two factors:
a) The ratio of saturated fatty acids contained in the oil, versus unsaturated fatty acids.
   There are two types of unsaturated fatty acids: Mono-unsaturated and polyunsaturated. The saturated fatty acids are the least vulnerable and the polyunsaturated the most vulnerable to degradation.
b) The natural content in the oil and the potency of such compounds in the oil, known as antioxidants.
   Antioxidants are compounds that react with free radicals and inhibit free-radical chain reaction. Oil seeds or other raw material for oil, may, apart from actual antioxidants, contain compounds that are not formally antioxidants (which do not interfere with free-radical formation) in their normal stage, but which may under certain circumstances change their chemical structure into active antioxidants. These compounds are called antioxidative *precursors.* For the purpose of this invention, such precursors are included in the concept antioxidants, even if it is not explicitly mentioned.

The antioxidant contents of crude oil is to some extent depending on the extraction method, either the oil is extracted by solvents or by expelling (physical pressure). Still, crude oil often has a high content of antioxidative power. The crude oil also contains a number of undesired substances like water, free fatty acids, phospholipids, metal traces, discoloration agents and pesticide residues. These substances have to be removed in a process called refining. There are two types of refining, a chemical process and a physical process. Both processes do not only remove the unwanted substances but because the refining requires very active chemicals and some stages are performed in very high temperatures, also vitamins and antioxidants are removed at the same time.

There are several reasons why it is highly desirable to retain maximum antioxidative power in the refined oil: During degradation of organic compounds free radicals are formed. Free radicals *in vivo* influence the pace of degradation and senescence of the cells and may cause damage to DNA. During storage of food containing oil, free-radicals are formed, giving off-flavour and off-odour to the food; during deep-fat frying of food the free-radical formation is accelerated, initiating an antioxidative chain reaction. The degraded oil gets darker, starts foaming, and develops an off-odour and forms polymerisation and a high viscosity: the oil must be discarded. The reaction with antioxidants yields unreactive radicals that cannot propagate the chain reaction; antioxidants, thus, reduce the threat posed by the free radicals.

Therefore it is highly desirable to develop a refining technique that retains maximum antioxidative power in the refined oil. The purpose of this invention is to offer a new, "dedicated" refining technique, dedicated to the said purpose. Oil seeds and other raw material for oils may contain compounds that are not formally antioxidants, but called precursors as they can develop antioxidative function in processing or *in vivo.* The same transformation of the precursors to active compounds can also happen if oil containing antioxidative precursors is mixed with acids, as when blending the oil with vinegar for salad dressing or mayonnaise. The expression "antioxidative power", hence, refers both to actual antioxidants and to their precursors.

### BACKGROUND ART

It is common to add *synthetic* antioxidants such as Butylated Hydroxy Anisole (BHA), Butylated Hydroxy Tolulene (BHT), Propyl Gallate. Tertiary Butyl Hydroxy Quinone (TBHQ) to oils. They are mainly used to Inhibit oxidation during the storage of oil. They are too unstable to have any useful function if the oil is used for frying. There is among the public a growing concern that synthetic chemicals may not be safe and synthetic material in food Is often mentioned in connection with allergic reactions. When it comes to *natural* antioxidants in edible oil, previous science has mainly dealt with tocopherol. As other antioxidants tocopherol also suffers in refining. But it is not seen as a great problem: It is perfectly possible to extract tocopherol and permitted to add it into any refined oil and justify the content up to a certain level. Such addition is permitted in most countries. However, it is well known to the workers of the art, that it is counter-productive to add too much tocopherol, as abundance of tocopherol tends to be pro-oxidative. In frying tocopherols are rather unstable and it has been reported that about 50 % of the tocopherol has disappeared after two hours of frying operation. One type of the tocopherols (γ-tocopherol) is more stable than the other types.. Certain *crude* speciality oils, as for example *sesame oil, rice bran oil, oat germ oil, wheat germ oil, coffee oil* contain potent antioxidative agents. Sesame seeds contain a unique compound, called sesamolin. Rice brans contain a unique group of steryl ferulates called oryzanol. Both sesame seeds and rice brans are rich in γ-tocopherol, but also in Δ-5 and Δ-7 avenasterol. These sterols contain ethylidene side-chains in high concentration which, if present in the refined oil, act as polymerisation inhibitors, which is very useful in frying applications. However, in usual refining these antioxidants and antioxidative agents are significantly reduced; in some cases they disappear. Even if it would be possible to extract some of the antioxidants or manufacture them synthetically, they would not be permitted as additive in oil for human consumption. If oils can be manufactured with a rich *natural* content of these compounds, this oil can then been used as a constituent, to be blended with any bulk oil. Previous science (see European patent 477 825 by this inventor) has shown that there is a synergistic effect, meaning that even a small amount of constituent can have a substantial antioxidative effect on the blend.

The role of free radicals and antioxidants is well explained in a paper by Michael J.Thomas in reference no. 1. Free radicals are species that have a single unpaired electron. Antioxidants react with radicals, giving products that will not propagate autoxidation.

The U.S. Review *Food Technology* made a special report in their November 1996 issue (reference 2): *ANTIOXIDANTS: Tools for Preventing Lipid Oxidation.* It covers the properties of antioxidants to inhibit oxidation in foods as well as hearth and nutritional claims for antioxidants.

O.I. Aruoma makes an assessment of potential prooxidant and antioxidant actions (reference 3). Free radical oxidation of the lipid components in foods by the chain reaction of lipid peroxidation is mentioned as major problem for food manufacturers. He discusses experimental tools to evaluate the antioxidative actions of novel compounds. He stresses the usefulness of antioxidants to reduce free radical damage both in food processing and as important dietary factors, *in vivo* and *in vitro*

E.N. Frankel has produced a paper about evaluation methods for natural antioxidants and oxidative stability in food lipids (reference 4).

EP no. 477825 B1 (1996) "Edible fats and oils stabilized with sesame oil as a constituent" by Alf Silkeberg (reference no. 5), deals with stabilisation of other oils with sesame oil. But the sesame oil is solvent extracted and traditionally refined, bleached and deodorised. There is nothing in the mentioned patent that suggests a dedicated refining method, which is all what the present patent application is about. EP application no. 771 531 A2 (reference no. 6) by the same inventor introduces the concept "dedicated sesame oil". The "dedicated" approach to refining can be used for refining of any oil, which is rich in potent antioxidative power. The mentioned European patent application "Stable edible oil composition" may implicitly refer to the *desire* to have a new refining technique in a manner preserving substantial concentrations of antioxidant factors therein. But neither the patent nor the patent application should be regarded as prior art for the following reasons:
1) There is no description of the process by which the refining is made "dedicated" (for the reason that the process was not invented at the time of the filing of these applications). This refining technique is the object of the present invention.

**PATENT DOCUMENTS**

| Ref. no. | Patent no, | Date | Class | Inventor |
|---|---|---|---|---|
| 5. | EP 477 825 B1 | Dec 1996 | Int. A23D 9/00 | Silkeberg |
| 6. | EP 771531 A2 | Oct 1996 | Int. A23D9/00 | Silkeberg *) |
| 7. | US 4,880,574 | Nov 1989 | Int. C09F005-10 | Welsh |
| 9. | UK 1,053,807 | Jan 1967 | Int. C11 b 3/00 | Bock |
| 10. | US 5,552,167 | Sep 1996 | Int. A23D009-00 | Taylor et al. |
| 11. | US 5,290,579 | Mar 1994 | Int. C A23D 9/02 | Hitotsumatsu et al |
| 12. | WO 95/30727 | | | |

| | | | | |
|---|---|---|---|---|
| *) patent application published May 7^{th} 1997, Bulletin 1997/19 | | | | |

### OTHER PUBLICATIONS

1 Michael J.Thomas, The Role of Free Radicals and Antioxidants: How Do We Know That They Are Working? Critical Reviews in Food Science and Nutrition 35 (1&2): 21-39 (1995) 1995 by CRC Press, Inc.
2 J.Glese, Antioxidants; Tools for Preventing Lipid Oxidation, Food Technology, Nov. 1996, pp 73-80
3. Okezie I.Aruoma, Assessment of Potential Prooxidant and Antioxidant Actions. Journal of American Oil Chemists Society, vol. 73, no 12,(1996) pp 1617-1625
4. E.N. Frankel, In search of better methods to evaluate natural antioxidants and antioxidative stability in food lipids, Trends in Food Science & Technology, July 1993, Vol. 4, pp 220-225.
8. J.H Han & S.Y. Ann, Effects of oil refining processes on oil characteristics and oxidation stability of sesame oil, J.Korean Agric. Chem. Soc. 36(4), 284-289 (1993)*.*
12. J.L.Weihrauch and J.M. Gardner, Sterol content of foods of plant origin. J of The American Dietetic Association, Vol. 73, July pp 39-47 (1978*).*
13. Y.Fukuda et al. Chemical Aspects of the Antioxidative Activity of Roasted Sesame Seed Oil- and the Effect of Using the Oil for Frying, Agric. Biol Chem. 50 (4, pp 857 -862) (1986*)*
14. Bailey's Industrial Oil and Fat Products, Fifth Edition, Vol. 4, Chapters 3 (refining and bleaching) and 6 (deodorisation), John Wiley, New York, 1996.

Keywords: edible oil, refining, antioxidants, sesame, ricebran oil, wheat germ oil, oat germ oil, coffee oil, tocopherol, avenasterol, silica gel, extraction, degumming, neutralisation, neutralization, bleaching, deodorisation, deodorization.

U.S. Patent no. 4880574 "Method for refining glyceride oils, using partially dried amorphous silica hydrogels" by Welsh & al., (reference no 7) describes a method to use partially dried amorphous slilica hydrogels for chemical refining of edible oils. The purpose of the invention is to provide cost savings and one that is easy to handle. The patented method is suggested as part of the dedicated refining in this patent application, but antioxidants or antioxidative actions are not mentioned in the referred patent, and there is nothing mentioned therein to make this invention obvious.

Han and Ann (1993) (reference no. 8) studied the effect of refining processes on characteristics and oxidative stability of sesame oil and concluded that refining did not affect sesame oil characteristics but decreased oxidative stability of sesame oil. This is true and typical for the usual refining technique, used today for all oils. There is not a single reference to attempts to change the refining technique for sesame oil in the direction suggested in this invention.

UK Patent no. 1,053,807 (H.Bock, 1964) - reference no.9 - "Method of Refining Liquid Fats and Oils" deals with the desire to reduce the glyceride losses and there is no mentioning of antioxidants.

U.S. Patent no. 5,552,167 (Taylor et. al. 1996)" Rice Bran Oil Antioxidant" duals with the antioxidants but not with the refining technique. (Reference no. 10)

Hitotsumatsu & al. (reference no. 11) describe a process for producing an unsaponifiable matters-enriched rice bran oil in order to improve physical functions of the oil. The object is achieved by recovering unsaponifiable matters and ferulates from the residue during the refining process and adding the residues to the edible rice bran oil. The process has no similarities with the present dedicated refining process and no reference is made to antioxidants or free radical scavenging. There is no reference to a modified bleaching process and the deodorisation is made at 230°C which would all but destroy the antioxidants, the retaining of which are the scope of the present invention.

J.L. Weihrauch and J.M.Gardner (reference no. 12) demonstrate the loss of Δ-5 Avenasterol in usual refining for various speciality oils from which the following table is extracted and the loss calculated. (Δ-5 Avenasterol is a potent antioxidant and polymerisation inhibitor).

**Table no. 1 Reduction of D-5 Avenasterol in conventional refining**

| Oil | Δ-5 Avenasterol | mg/100 g | Loss in refining | |
|---|---|---|---|---|
| | Crude | Refined | mg/100g | % |
| rice bran oil | 355 | 116 | 239 | 67 |
| sesame seed oil | 265 | 79 | 186 | 70 |
| wheat germ oil | 118 | 33 | 85 | 72 |

Y.Fukuda et al. (reference no. 13) describe the losses suffered in antioxidative power for sesame oil during the different refining steps, see table no. 2: Sesame antioxidants are of particular interest, as they are probably the most powerful antioxidants contained in any oil seeds or plants. Sesamolin is a precursor to the antioxidants sesamol, sesaminol, epi-sesaminol, sesamol dimers. In the example (below, page 6) the crude oil contained 510-mg/100 g sesamolin and the refined oil O. Only minor quantities of the other antioxidative sesame substances were retained in the refined oil. The γ-tocopherol was reduced from 33,5 to 18,4 mg/100 g. All the different stages of traditional refining contribute to this reduction, the degumming, the washing (to a minor degree), the bleaching (substantially) and the deodorisation (substantially). As far as sesamolin, the most active anti-oxidative agent, is concerned, it was practically totally destroyed during bleaching of crude unroasted sesame oil. Other antioxidants were minimised in the deodorisation process.

### DISCLOSURE OF THE INVENTION

It is an object of the invention to provide a new method to refine certain edible oils that are rich in components containing potent antioxidant power, by a special refining technique in order to retain maximum antioxidative power of the crude oil in the refined oil.

The invention is as disclosed in claims 1- 12.

The invention is particularly useful in order to retain the antioxidative power in sesame oil and rice bran oil, oat germ and wheat germ oil, coffee oil and ether speciality oils, known to contain components that act as antioxidants and polymer inhibitors. Polymers are undesired components that are formed when unsaturated fats are heated in air at a high temperature and changed in the molecular construction.

There are in principle two types of oil refining, chemical (caustic) refining and physical (steam) refining. State-of-the-art processes for both chemical and physical refining are described in Bailey's InduStrial Oil and Fat Products, Fifth Edition, Vol.4, Chapter 3 and 6 (1996)(Reference no. 14). Traditional physical refining is made under high temperature (under vacuum at 250-270°C). There is a great loss of antioxidants under such harsh conditions and physical refining therefore not recommended for the purpose of this invention. Future physical refining methods may be modified in future to comply with the technique referred to in this invention, and it is not intended to restrict the patent to only chemical refining, even if the examples referred to below deal with chemical refining. The purpose of all refining is to remove undesired components, as last traces of solvents (for solvent extracted oils) suspended solid particles, colorants and free fatty acids and to remove undesired flavours a odours, metal traces and pesticide residues. The usual steps in traditional refining are:
1. Degumming
2. Neutralisation
3. Bleaching
4. Deodorisation

All these steps are modified for the purpose of this invention. Below there will be a summary of the usual process and the modification steps then disclosed in detail.
1. Degumming is generally carried out using 1 % - 3% water or an aqueous solution of phosphoric acid and heating at 60°C-85°C for 10 to 30 minutes. The process removes bulk of phospholipids or "gums" and proteinaceous matter and reduces colour components and trace metals.
2. The neutralisation Involves the addition of dilute alkali to remove free fatty acids from the oil. The acids are converted to soaps, which are removed by centrifugation, decantation or running off the soap stock from the bottom of the vessel. Neutralisation conditions vary: contact time 2 to 15 minutes and temperature 70°C to 95 °C, depending on batch or continuous process. Hot water washings are then given to remove most of the soaps and the oil is then dried under reduced vacuum.
3. The primary object of bleaching of the neutral oil is to remove the majority of coloured substances present. Traditionally, natural days, caustic or acid, have been used; recently acid-activated days are most common, both of which tend to efficiently absorb colour components. Bleaching earth not only removes colour pigments but also trace metals and any residual soaps remaining from the neutralised process. The removing of trace metal is important as such components act as catalysts for free radicals. Normal bleaching conditions can be 0.5 to 2 % activated bleaching earth, the temperature 90°C to 110°C, contact time 15 to 30 minutes and pressure 20- 50 mbar. Thermal bleaching conditions can be 240-260 °C, the time 45 to 120 minutes and vacuum 1-6 mbar.
4. Deodorisation - the last refining stage - is employed to remove off-flavour components, remaining free fatty acids, mono- and diglycerides and any colour decomposition products. Deodorisation conditions are: Temperature 210-270 °C, holding time: 3-8 hours for batch process and 15 to 120 minutes for continuous and/or semi-continuous deodorisation. The steam consumption is 5 to 10 % in batch and 1 to % 3 % in continual/somi-continous deodorisation. The pressure is 1-6 mbar. There is an alternative process: Physical/steam refining with the following characteristics: Acid degumming and the oils and also distills out the remaining free fatty acids. Both refining processes result in an oil, which is light in colour, bland in flavour and odour and virtually free of unwanted components.

All the traditional refining steps not only remove undesired compounds; they also remove or considerable reduce the content of a large number of desired components such as natural antioxidants, polymer inhibitors and vitamins. Part of the desired components may still be present before the last refining step, but then decrease substantially or disappear in the high degrees used in the deodorisation process.

The modifications of the traditional refining, the "dedicated" refining process, is described below:

### DEDICATED REFINING PROCESS

1. **Screening for suitable raw material.** Screening for good raw material is a standard procedure. However, the screening is otherwise made with other criteria in mind than the antioxidative potency. Only such raw material that has maximum antioxidative potency should be used, the raw material must as a minimum contain the typical amounts, preferably more. Seeds, kernels and fruits with higher than average amount of undesired components such as chlorophyll and free fatty acids must be avoided. The raw material must be free of pesticide residues. These unwanted substances can be accepted, at a price discount for reduced yield, for traditional refining, but not for the dedicated refining. The reason is that their removal in the refining process would simultaneously harm the antioxidative potency.

### 2. Extraction

Solvent extraction has been found to yield the highest content of antioxidant, depending on the choice of solvent. The choice of solvent is critical and alcohols are preferred as solvent agents rather than hydrocarbons. There is no specific claim made for a dedicated solvent extraction which has been described in previous science (reference no. 5) but referred to in this context to make the description comprehensive. When it comes to physical expelling of oil out of the seeds (brans, kernels, fruit) it is generally done in two steps. The conventional wisdom is that the first press yields a better quality and often advertised on the labels of speciality oils, sold in retail, that the oil has been used from "the first press". The opposite is the case, when it comes to the presence of antioxidants. The antioxidants are most abundant near the hull, where they are most useful to protect the seeds on the plant. The second press deals with the oil that is nearer to the outskirts and yields a higher amount of antioxidants. The oil for the second press is therefore preferred, if a choice can be made. Generally, however, the oil from both expelling processes is blended and used for economical reasons.

### 3. Degumming

Phospholipids and other unwanted components such as proteinaceous material ("gums") are removed. In the "dedicated" method the degumming oil is made with 50-500 mg/kg citric acid (using 10 to 20 percent solution) at 30°C - 50 °C for 15 to 20 minutes under nitrogen blanketing. The temperature of the treated (degummed) oil is then raised to 70°C and centrifuged.

### 1. Neutralisation

The oil is neutralised with a solution of 2-3 N NaOH (caustic soda) at 90-95°C in a continuous short-mix processing equipment. The neutralised oil is then centrifuged. Depending upon the free fatty acid content, one single or no hot water wash is given in order to retain sensible components like oryzanol and Δ-5 Avenasterol. The oil is dried under vacuum at 90-95°C.

### 5. Bleaching

During traditional bleaching of sesame oil sesamolin is converted into active antioxidants, sesamol, sesaminol and epi-sesaminol. This conversion from an inert stage to active antioxidants has in previous science been regarded as an advantage. This patentee has come to the opposite conclusion. The precursor should - by dedicated bleaching as described below - be left in the "dormant" stage and only develop into the actual antioxidative stage when needed, either *in vivo* or activated with the acidity in vinegar for the manufacture of mayonnaise or for salad dressing. For deep-frying the big acidity in vinegar for the manufacture of mayonnaise or for salad dressing. For deep-frying the big advantage is that the total antioxidative potency is available when challenged and needed. The gradual conversion during frying renders a substantially increased stability to the oil.

In the "dedicated" bleaching process 0.1 % to 2 % amorphous silica gel and 0.005-0.02 % citric acid is added to the oil at 50-90°C and treated for 15 to 30 minutes under vacuum (10-20 mbar). This treatment minimises the usual treatment with bleaching earth. The purpose is to remove traces of soap, phospholipids and trace metals. If necessary, some minor quantities of bleaching earth might be added to remove colour components and peroxide decomposition products. The treatment with silica gel is described in previous science (reference no.7), the treatment being advocated for other reasons than those referred to in this patent application. A similar treatment has now been found to be useful for the purpose of this invention.

The oil is then filtered fast and cooled under nitrogen/inert atmosphere. A mixture of 0.05 to 0.2 % carbon and 0.1 to 1 % weak-acid bleaching clay (pH 5-7) is introduced at 95-100°C for 20 to 50 minutes under vacuum (5 to 20 mbar). The bleached oil is fast filtered and cooled under nitrogen inert atmosphere.

These "dedicated" bleaching conditions bring about little changes or only desirable alterations in the potent antioxidant precursors and the related antioxidant compounds. This is contrary to an almost total loss in a valuable component like sesamolin in traditional refining. Even gamma-tocopherol, which is known as an effective antioxidant is thus left virtually untouched, compared to a significant loss in the usual bleaching process (see table x).

### Deodorisation

Traditional deodorisation would make the desired ingredients suffer unacceptably. Generally the flavour of the oil, refined according to the dedicated process, is very mild. As the refined oil is intended to be used at a proportion of 1 % - 5 % (or even less), mixed with bulk oil, a slight flavour deviation may be acceptable. However, if any unwanted flavouring is experienced, depending upon the quality of the raw material, this flavour is removed by inert gas deodorisation under mild conditions. The following process is also indispensable if there is any uncertainty about a possible content of pesticide residues. The oil is exposed to inert gas deodorisation and heated to 120-150°C with very high purity nitrogen flushing for one or two hours at a pressure of 0,5 to 2 mbar; temperature and pressure depending upon the degree of off-flavour.

### EXAMPLE

The following non-limiting example for chemical refining of crude sesame oil describes the difference between traditional refining and dedicated refining. The figures for the traditional refining are taken from reference no. 13.. The dedicated refining has been made as described above, under the directions of the patentees in a batch with about 10.000 kgs of crude sesame oil.

The figures are given as mg/kg (the figures by Fukuda et al. were originally quoted in mg/100 g and converted in this table for comparison)

**Table 2**

| **Loss of antioxidative components at various refining steps.** | | | | | | |
|---|---|---|---|---|---|---|
| Comparison between traditional and "dedicated" refining (Sesamin and Episesamin are not included in the table as they have not been shown to have any antioxidative function *in vitro*) **mg/kg** | | | | | | |
| | Sesamolin | Sesamol | Sesaminol | Episesaminol | γ-tocopherol | **Total** |
| **Traditional refining** | | | | | | |
| Crude sesame seed oil | 5100 | 43 | 0 | 0 | 335 | 5478 |
| Neutralised and washed | 4248 | 7 | 0 | 0 | 228 | 4481 |
| After bleaching | 0 | 463 | 339 | 480 | 218 | 1500 |
| After deodorisation | 0 | 17 | 284 | 343 | 184 | 828 |
| | | | | | | |

| **Dedicated refining** | | | | | | |
|---|---|---|---|---|---|---|
| Crude sesame seed oil | 8188 | 2 | 10 | n.d. | 402 | 8602 |
| Neutralised and washed | 6092 | trace | trace | n.d. | 401 | 6493 |
| After bleaching | 3273 | 1781 | 71 | 36 | 398 | 5559 |
| After deodorisation | 3160 | 1593 | 74 | 36 | 383 | 5246 |

| | | | | | | |
|---|---|---|---|---|---|---|
| n.d.= not detected | | | | | | |

These data on desirable components, determined after different stages of processing , clearly demonstrate the advantages with the dedicated refining versus the traditional one. In the dedicated process of sesame seed oil, more than 78 % of sesamolin and the related potent components and 95 % of γ-tocopherol were retained. In contrast, using traditional refining, the losses were very high, e.g. only 12.5 % of the originally present sesamolin and related components and 55 % of γ-tocopherol were retained in the refined oil.

## Claims

1. A process for refining edible crude oil, selected from the group of oil comprising sesame seed oil, ricebran oil, wheat germ oil, oat germ oil and coffee oil, tee seed oil, pine seed oil, rich in natural antioxidative potential, the process being dedicated to retaining a substantial amount of the original antioxidative potential in the refined oil, modifying the degumming, the neutralization, the bleaching and the deodorization refining steps, comprising (a) a temperature lower than 60°C and the addition of 50-500 mg/kg citric acid solution in the degumming process and (b)eliminating hot water washing in the neutralizing process and (c) eliminating the use of caustic or acid clay, which is replaced by amorphous silica gel with a moisture of at least 25 % and an average pore diameter of between 2 and 6 mn (20-60Å) in the bleaching process and (d) either replacing the deodorization process by the use of inert gas or making a short deodorization at a temperature range of 120°C to 150 °C.

2. Process according to claim 1, further comprising step (e), wherein the resulting oil, is blended with oils selected from the group of oil comprising soybean oil, palm oil, rapeseed (canola) oil, sunflower oil, corn (maize) oil, cottonseed oil, peanut oil, coconut oil, safflower oil or grapeseed oil in order to inhibit or delay an autoxidative chain reaction in order to prepare an edible oil composition.

3. Margarine or other butter imitations, wherein the oil part contains between 0,5 % and 7 % of an oil processed according to claim 1, with the provision that in step (d) deodorisation is performed.

4. A manufactured food used for salad dressing, wherein the oil part contains between 0,5 % and 7 % of an oil processed according to claim 1, with the provision that in step (d) deodorisation is performed.

5. A manufactured food used for sauces, such as mayonnaise, wherein the oil part contains between 0,5 % and 7 % of an oil processed according to claim 1, with the provision that in step (d) deodorisation is performed.

6. Manufactured potato crisps or corn (maize) crisps, wherein the oil part contains between 0,5 % and 7 % of an oil processed according to claim 1, with the provision that in step (d) deodorisation is performed.

7. Manufactured French-fries (potato chips), wherein the oil part, used for frying, contains between 0,5 % and 7 % of an oil processed according to claim 1, with the provision that in step (d) deodorisation is performed.

8. Manufactured deep-fried fish, wherein the oil part, used for frying, contains between 0,5 % and 7 % of an oil processed according to claim 1, with the provision that in step (d) deodorisation is performed.

9. Manufactured deep-fried meat, wherein the oil part, used for frying, contains between 0,5 and 7 % of an oil processed according to claim 1, with the provision that in step (d) deodorisation is performed.

10. Manufactured deep-fried vegetables, wherein the oil part, used for frying, contains between 0,5 and 7 % of an oil processed according to claim 1, with the provision that in step (d) deodorisation is performed.

11. Manufactured bakery products containing oil, wherein the oil part contains between 0,5 and 7 % of an oil processed according to claim 1, with the provision that in step (d) deodorisation is performed.

12. Manufactured ice cream products, wherein the oil part contains between 0,5 and 7 % of an oil processed according to claim 1, with the provision that in step (d) deodorisation is performed.

## Patentansprüche

1. Verfahren zum Raffinieren von essbarem Rohöl, ausgewählt aus der Gruppe von Ölen, umfassend Sesamsamenöl, Reiskleieöl, Weizenkeimöl, Haferkeimöl und Kaffeeöl, Teesamenöl, Piniensamenöl, reich an natürlichem antioxidativem Potential, wobei das Verfahren geeignet ist, eine wesentliche Menge des ursprünglichen antioxidativen Potentials im raffinierten Öl zu behalten, unter Modifikation der Degummierungs-, Neutralisations-, Bleichung- und Deodorisierungsschritte, umfassend (a) eine Temperatur, welche niedriger als 60°C ist und die Zugabe von 50 bis 500 mg/kg Zitronensäurelösung im Degummierungsschritt und (b) ein Eliminieren des Heißwasserwaschschritts im Neutralisationsprozess und (c) ein Eliminieren der Verwendung von ätzender oder saurer Tonerde, welche durch amporphes Kieselgel mit einem Feuchtigkeitsgehalt von mindestens 25 % und einem durchschnittlichen Porendurchmesser von 2 bis 6 nm (20 bis 60 Å) im Bleichungsprozess ersetzt wird und (d) entweder ein Ersetzen des Deodorisierungsprozesses durch die Verwendung von inertem Gas oder ein Durchführen einer kurzen Deodorisierung bei einem Temperaturbereich von 120°C bis 150°C.

2. Verfahren nach Anspruch 1, ferner umfassend Schritt (e), wobei das resultierende Öl mit Ölen gemischt wird, welche ausgewählt sind aus der Gruppe von Ölen, umfassend Sojabohnenöl, Palmöl, Rapsöl (Canolaöl), Sonnenblumenöl, Korn (Mais)öl, Baumwollsamenöl, Erdnussöl, Kokosnussöl, Distelöl oder Traubensamenöl, um eine autooxidative Kettenreaktion zu verhindern oder zu verzögern, um eine essbare Ölzusammensetzung herzustellen.

3. Margarine oder Butterimitationen, wobei der Ölanteil zwischen 0,5 % und 7% eines Öls enthält, welches gemäß Anspruch 1 hergestellt ist, mit der Vorgabe, dass in Schritt (d) eine Deodorisierung durchgeführt wird.

4. Hergestelltes Lebensmittel, welches für Salatdressings verwendet wird, wobei der Ölanteil zwischen 0,5 % und 7% eines Öls enthält, welches gemäß Anspruch 1 hergestellt ist, mit der Vorgabe, dass in Schritt (d) eine Deodorisierung durchgeführt wird.

5. Hergestelltes Lebensmittel, welches für Soßen verwendet wird, wie beispielsweise Majonäse, wobei der Ölanteil zwischen 0,5 % und 7% eines Öls enthält, welches gemäß Anspruch 1 hergestellt ist, mit der Vorgabe, dass in Schritt (d) eine Deodorisierung durchgeführt wird.

6. Hergestellte Kartoffelcrisps oder Maiscrisps, wobei der Ölanteil zwischen 0,5 % und 7% eines Öls enthält, welches gemäß Anspruch 1 hergestellt ist, mit der Vorgabe, dass in Schritt (d) eine Deodorisierung durchgeführt wird.

7. Hergestellte Pommes Frites (Kartoffelchips), wobei der Ölanteil, welcher für das Frittieren verwendet wird, zwischen 0,5 % und 7% eines Öls enthält, welches gemäß Anspruch 1 hergestellt ist, mit der Vorgabe, dass in Schritt (d) eine Deodorisierung durchgeführt wird.

8. Hergestellter tiefgefrorener Fisch, wobei der Ölanteil, welcher für das Frittieren verwendet wird, zwischen 0,5 % und 7% eines Öls enthält, welches gemäß Anspruch 1 hergestellt ist, mit der Vorgabe, dass in Schritt (d) eine Deodorisierung durchgeführt wird.

9. Hergestelltes tiefgefrorenes Fleisch, wobei der Ölanteil, welcher für das Frittieren verwendet wird, zwischen 0,5 % und 7% eines Öls enthält, welches gemäß Anspruch 1 hergestellt ist, mit der Vorgabe, dass in.Schritt (d) eine Deodorisierung durchgeführt wird.

10. Hergestelltes tiefgefrorenes Gemüse, wobei der Ölanteil, welcher für das Frittieren verwendet wird, zwischen 0,5 % und 7% eines Öls enthält, welches gemäß Anspruch 1 hergestellt ist, mit der Vorgabe, dass in Schritt (d) eine Deodorisierung durchgeführt wird.

11. Hergestellte Bäckereiprodukte, welche Öl enthalten, wobei der Ölanteil zwischen 0,5 % und 7% eines Öls enthält, welches gemäß Anspruch 1 hergestellt ist, mit der Vorgabe, dass in Schritt (d) eine Deodorisierung durchgeführt wird.

12. Hergestellte Eiscremeprodukte, wobei der Ölanteil zwischen 0,5 % und 7% eines Öls enthält, welches gemäß Anspruch 1 hergestellt ist, mit der Vorgabe, dass in Schritt (d) eine Deodorisierung durchgeführt wird.

## Revendications

1. Procédé pour le raffinage d'huile comestible brute, sélectionnée dans le groupe d'huiles comprenant huile de graine de sésame, huile de riz, huile de germe de blé, huile de germe d'avoine et huile de café, huile de graine de thé, huile de germe de pin, riche en potentiel antioxydant naturel, le procédé étant dédié à la conservation d'une quantité substantielle du potentiel antioxydant naturel original dans l'huile raffinée, modifiant les étapes de raffinage de dégommage, de neutralisation, de décoloration et de désodorisation, comprenant (a) une température inférieure à 60°C et l'ajout de 50-500 mg/kg d'une solution d'acide citrique dans le procédé de dégommage et (b) élimination du lavage à l'eau chaude dans le procédé de neutralisation et (c) élimination de l'utilisation d'argile caustique ou acide, qui est remplacée par un gel de silice amorphe avec une humidité d'au moins 25% et un diamètre de pore moyen entre 2 et 6 nm (20-60Å) dans le procédé de décoloration et (d) soit remplacement du procédé de désodorisation par l'utilisation d'un gaz inerte soit réalisation d'une courte désodorisation à une gamme de température de 120°C à 150°C.

2. Procédé selon la revendication 1, **caractérisé en ce qu'**il comprend en outre une étape (e) dans laquelle l'huile obtenue est mélangée avec des huiles sélectionnées dans le groupe d'huiles comprenant huile de soja, huile de palme, huile de colza (canola) , huile de tournesol, huile de maïs (maïs), huile de graine de coton, huile d'arachide, huile de noix de coco, huile de carthame ou huile de grain de raisin en vue d'inhiber ou retarder une réaction en chaîne auto-oxydante en vue de préparer une composition d'huile comestible.

3. Margarine ou autre imitations de beurre, dans laquelle la partie huile comprend entre 0.5% et 7% d'une huile obtenue selon la revendication 1, sachant que dans l'étape (d) une désodorisation est effectuée.

4. Une nourriture manufacturée utilisée pour assaisonner la salade, dans laquelle la partie huile comprend entre 0.5% et 7% d'une huile obtenue selon la revendication 1, sachant que dans l'étape (d) une désodorisation est effectuée.

5. Une nourriture manufacturée utilisée pour des sauces, telle que la mayonnaise, dans laquelle la partie huile comprend entre 0.5% et 7% d'une huile obtenue selon la revendication 1, sachant que dans l'étape (d) une désodorisation est effectuée.

6. Chips de pomme de terre ou de maïs (maïs) manufacturé, dans laquelle la partie huile comprend entre 0.5% et 7% d'une huile obtenue selon la revendication 1, sachant que dans l'étape (d) une désodorisation est effectuée.

7. Frite (frite de pommes de terre) manufacturée, dans laquelle la partie huile, utilisée pour frire, comprend entre 0.5% et 7% d'une huile obtenue selon la revendication 1, sachant que dans l'étape (d) une désodorisation est effectuée.

8. Poisson frit manufacturé, dans lequel la partie huile, utilisée pour frire, comprend entre 0.5% et 7% d'une huile obtenue selon la revendication 1, sachant que dans l'étape (d) une désodorisation est effectuée.

9. Viande frite manufacturée, dans laquelle la partie huile, utilisée pour frire, comprend entre 0.5% et 7% d'une huile obtenue selon la revendication 1, sachant que dans l'étape (d) une désodorisation est effectuée.

10. Légumes frits manufacturés, dans lesquels la partie huile, utilisée pour frire, comprend entre 0.5% et 7% d'une huile obtenue selon la revendication 1, sachant que dans l'étape (d) une désodorisation est effectuée.

11. Produits de boulangerie manufacturés comprenant de l'huile, dans lequel la partie huile comprend entre 0.5% et 7% d'une huile obtenue selon la revendication 1, sachant que dans l'étape (d) une désodorisation est effectuée.

12. Crèmes glacées manufacturées comprenant de l'huile, dans lequel la partie huile comprend entre 0.5% et 7% d'une huile obtenue selon la revendication 1, sachant que dans l'étape (d) une désodorisation est effectuée.
